# EUROPEAN PATENT SPECIFICATION

(11) **EP 3 386 160 B1**
(45) Date of publication and mention of the grant of the patent: **02.03.2022**
(21) Application number: 17164954.4
(22) Date of filing: 05.04.2017
(51) Int. Cl.: H04L 29/06, H04L 29/08

(54) **PROVIDING MULTICAST ADAPTIVE BITRATE CONTENT**
BEREITSTELLUNG VON MULTICAST-INHALT MIT ADAPTIVER BITRATE
FOURNITURE D'UN CONTENU À DÉBIT BINAIRE ADAPTATIF DE MULTIDIFFUSION

(43) Date of publication of application: 10.10.2018
(73) Proprietor: Nokia Technologies Oy, 02610 Espoo (FI)
(72) Inventor: SWINDELLS, Thomas, Bristol, BS32 4UF (GB)
(74) Representative: Bryers LLP

(56) References cited:
- US-A1- 2012 230 333
- US-A1- 2014 355 603
- US-A1- 2016 294 898

## Description

### FIELD OF THE INVENTION

Aspects relate, in general to a method for providing an adaptive content to user equipment.

### BACKGROUND

The term unicast relates to communication between a single sender and a single receiver over a network. The term multicast relates to communication between a single sender and multiple receivers.

Multicast Adaptive Bit Rate (mABR) is a technology whereby Live HyperText Transfer Protocol (HTTP) video content (such as manifests and video/audio chunks), which are normally delivered over a unicast HTTP using a Transmission Control Protocol (TCP) connection, are instead multicast over the network to a proxy device located near the end player device. The proxy converts the multicast stream back into standard HTTP over TCP responses which are served to the player or requesting device. The player device makes requests via the proxy and if the proxy has the content (received over multicast) in cache it will return the content, otherwise it will fetch the content from the upstream server (Content Delivery Network (CDN) node or origin).

US2016/294898 describes a multicast adaptive bit rate receiver is employed that delays issuance of specific unicast HTTP adaptive bit rate media segment requests while waiting for receipt of stripped multicast media segments from a multicast server. An HTTP proxy may create a new internal state that waits for subsequent media segment URL requests. As the stripped multicast media segments are received, the HTTP requests queued in the proxy may be delivered to the local ABR client.

US2012/230333 concerns content searches in a distributed environment such as in an IPv6 network. This is achieved by deriving a multicast address from a string associated with the content to be searched. The searching party and the server owning the content use a common function for deriving this multicast address. The content owner listens to this multicast address and the searching party sends requests for the content on that multicast address.

US2014/355603 relates to a system for adaptive bit rate distribution of multicast streams may include one or more processors and a memory. The one or more processors may be configured to identify streams, such as multicast streams, transmitted by a content delivery network. The streams may each contain a content item that is encoded at a different bit rate for each stream. The one or more processors may determine segments of the streams, for example based on time stamps associated with the content item or markers of the streams. The one or more processors may transmit a first segment of a first stream encoded at a first bit rate to a user device in response to a request therefor and, upon completing the transmission of the first segment, transmit a second segment of a second stream encoded at a second bit rate to the user device in response to a request therefor.

### SUMMARY OF THE INVENTION

The invention is defined by a method according to claim 1 and a proxy according to claim 11 and a computer program product according to claim 15. Preferred embodiments are defined by the dependent claims.

According to an example, there is provided a method for providing multicast adaptive bitrate content to user equipment, the method comprising storing data representing a mapping from a content identifier to a multicast address for the content at a proxy configured to distribute the content, the data including a start value associated with delivery of the content or fragments thereof to the proxy, receiving, at the proxy, a request for content from user equipment, using, by the proxy, the data representing the mapping, determining whether the content is available at the proxy, and in response to a determination that the content is not available at the proxy determining, based on the start value, whether the content will become available at the proxy within a threshold period of time,and delivering the content to the user equipment from the proxy based on the determination of how to handle the request for content from the user equipment. The method can further comprise generating the data representing a mapping from a content identifier to a multicast address for the content at the proxy.

The method can further comprise generating the data representing a mapping from a content identifier to a multicast address for the content at a multicast apparatus configured to provide the content or fragments thereof to at least the proxy and transmitting the data from the multicast apparatus to the proxy. Data representing multiple mappings from content identifiers to respective multicast addresses for content can be provided and the method can further comprise selecting a mapping that best matches the request for content from user equipment. The method can further comprise generating, at the proxy, a request to join a multicast group associated with the requested content if the proxy is not a member of the group. The method can further comprise selecting a data mapping object from multiple data mapping objects according to a set of heuristics.

According to an example, there is provided a system for providing multicast adaptive bitrate content to user equipment, the system comprising a proxy configured to store data representing a mapping from a content identifier to a multicast address for the content, the data including a start value associated with delivery of the content or fragments thereof to the proxy, receive a request for content from user equipment, use the data representing the mapping to determine whether the content is available at the proxy, and in response to a determination that the content is not available at the proxy determining, based on the start value, whether the content will become available at the proxy within a threshold period of time, and deliver the content to the user equipment based on the determination of how to handle the request for content from the user equipment. The proxy can generate the data representing a mapping from a content identifier to a multicast address for the content. The system can further comprise a multicast apparatus configured to generate the data representing a mapping from a content identifier to a multicast address for the content and transmit the data to the proxy. The proxy can be an apparatus or a service.

According to an example, there is provided a proxy for providing multicast adaptive bitrate content to user equipment, the proxy comprising a cache to store data representing a mapping from a content identifier to a multicast address for the content, the data including a start value associated with delivery of the content or fragments thereof to the proxy, wherein the proxy is configured to receive a request for content from user equipment, use the data representing the mapping to determine whether the content is available at the proxy, and in response to a determination that the content is not available at the proxy determine, based on the start value, whether the content will become available at the proxy within a threshold period of time,and deliver the content to the user equipment based on the determination of how to handle the request for content from the user equipment. The proxy can generate the data representing a mapping from a content identifier to a multicast address for the content. The proxy can select a data mapping object from multiple data mapping objects according to a set of heuristics. The proxy can be a service executable in a memory of user equipment or physical component of user equipment.

According to an example, there is provided a computer program product, comprising a computer usable medium having computer readable program code embodied therein, said computer readable program code adapted to be executed to implement a method or providing multicast adaptive bitrate content to user equipment as provided herein.

### BRIEF DESCRIPTION OF THE DRAWINGS

Embodiments will now be described, by way of example only, with reference to the accompanying drawings, in which:
Figure I is a schematic showing a basic operation of functional components in a standard mABR deployment according to an example;
Figure 2 is a schematic showing internally generated data mapping objects according to an example;
Figure 3 is a schematic showing data mapping objects distributed from a server according to an example;
Figure 4 is a flow chart showing proxy criteria for handling of response according to an example;
Figure 5 is a flow chart showing criteria for selecting a 'best' data mapping object according to an example; and
Figure 6 is a schematic representation of a system according to an example.

### DESCRIPTION

Example embodiments are described below in sufficient detail to enable those of ordinary skill in the art to embody and implement the systems and processes herein described. It is important to understand that embodiments can be provided in many alternate forms and should not be construed as limited to the examples set forth herein.

Accordingly, while embodiments can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

The terminology used herein to describe embodiments is not intended to limit the scope. The articles "a," "an," and "the" are singular in that they have a single referent, however the use of the singular form in the present document should not preclude the presence of more than one referent. In other words, elements referred to in the singular can number one or more, unless the context clearly indicates otherwise. It will be further understood that the terms "comprises," "comprising," "includes," and/or "including," when used herein, specify the presence of stated features, items, steps, operations, elements, and/or components, but do not preclude the presence or addition of one or more other features, items, steps, operations, elements, components, and/or groups thereof.

Unless otherwise defined, all terms (including technical and scientific terms) used herein are to be interpreted as is customary in the art. It will be further understood that terms in common usage should also be interpreted as is customary in the relevant art and not in an idealized or overly formal sense unless expressly so defined herein.

Typically, in a mABR system a mechanism to select which multicast group(s) the proxy should be listening on (as it cannot listen to all channels at once due to limited bandwidth) is used and the system can decide when to leave the multicast groups to avoid unnecessary bandwidth usage. The system has to use mechanisms to avoid cache misses and upstream requests caused by the player requesting content that the proxy has not yet received, as well as being able to handle channels where clients are accessing both live content and time shifted content from the past (e.g. pause live TV, rewind/restart, catch-up services).

In an example, a 'channel map' can be used to define a uniform resource locator (URL) prefix/pattern to identify the 'channel' that is being watched and the corresponding multicast group which should be joined if any requests for that 'channel' are received by the proxy. Here, 'channel' can mean any streaming content. Whilst being efficient in terms of bandwidth used by the control messages this approach is geared for pure live services. If time-shifted content is accessed then this would trigger a multicast join on that 'channel' even though none of the live content delivered over the multicast would be accessed by the client.

In order to avoid players requesting content ahead of what the proxy has received, the last segment from a manifest file can be stripped, thereby keeping the player a chunk behind the proxy. This approach introduces at least a chunk length (2-10s) of additional latency behind live.

According to an example, data representing a mapping from a content identifier to a multicast address for the content can be stored at a proxy configured to distribute the content. The data can include a start value associated with delivery of the content or fragments thereof to the proxy. The data can be used to determine how to handle an incoming request for the content.

The data mapping can be generated shortly before the content is delivered, such as at the time a manifest file containing the new upcoming URIs is transmitted for example. Thus, a proxy will always know about upcoming URIs before the content is requested.

In an example, the proxy can cache the current active data mappings and when a content request is made it can look-up the URI in a cache or memory storing the data mappings. If the URI is stored, the proxy can trigger a multicast join. If the data mapping is not stored, the proxy assumes the content to relate to a time-shifted request and so there is no benefit of joining the multicast group.

According to an example, if the data mapping is stored in the cache the proxy has three paths it can follow:
1) If the content is also in cache (that is, it has already been received via multicast) the proxy can serve the content to the client requesting the content.
2) If the nominal start (or completion) time is in the future the proxy may 'pause' the client request, wait for the content to be received over multicast, and then return the received content to the client.
3) If the nominal completion time is in the past then the proxy can make an upstream unicast request to retrieve the content, as the multicast join is also issued future player requests are likely to result in cache hits.

In this manner, the hit rate on multicast delivery is maximized and unicast usage is minimized, whilst also supporting both time shift and live services being used from the same service, and removing the need to strip the last segment from a manifest files. Figure I is a schematic representation of an mABR deployment according to an example. The Origin/CDN 101 is the source of live content (such as ABR video content for example) that can streamed over a network, such as the internet and/or a cellular network for example. The mABR server 103 can make requests over http(s) (interface 1) to retrieve the ABR video manifest files and chunks as they become available. It sends (interface 2) the appropriate files over the appropriate multicast group, pacing delivery out at the appropriate rate. The player 105 (which physically could be collocated in the same device as the mABR proxy 107, or deployed as a separate box) requests content (interface 3) via the mABR Proxy 107. If the mABR Proxy 107 has previously received and cached content from the multicast stream then it will return the requested item directly. Otherwise the mABR proxy 107 will fetch the content (interface 4) from the upstream origin/CDN 101. This may or may not be the same instance as the mABR server 103 but will typically contain files that are identical to those being multicast.

The request from Player 105 may also trigger the mABR Proxy 107 to join the appropriate multicast group for that stream. With existing mABR devices the selection of the appropriate multicast group is through a simple channel map, where a URL pattern/prefix is compared against the URL being requested.

According to an example, the proxy 107 can process data mapping objects. These can comprise a mapping from a specific URI to the appropriate multicast address along with nominal start and completion times of when the content is expected to be pushed over multicast. The mappings can either be generated internally by the proxy 107 or be created and distributed by the mABR server 103 (or another component).

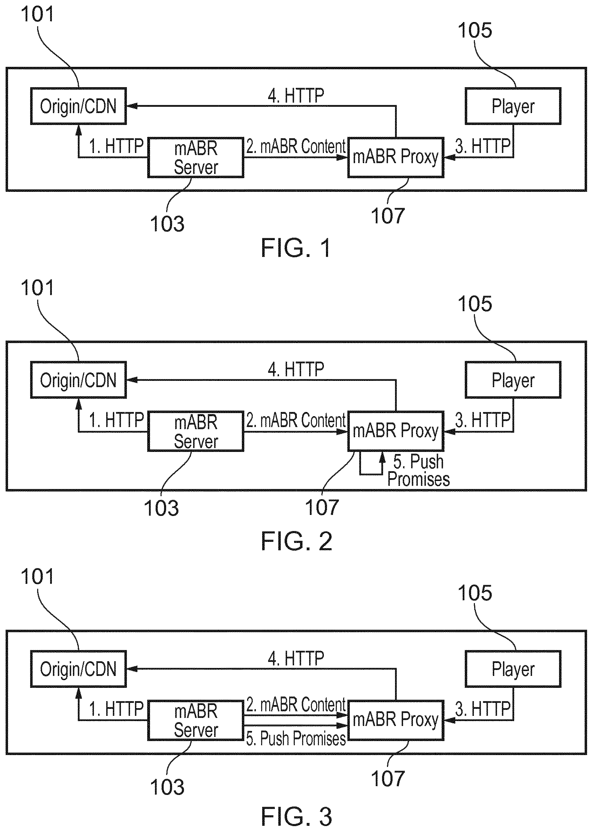

Figure 2 is a schematic representation of a system according to an example. More particularly, figure 2 shows a system in which a data mapping is generated by the proxy 107 (interface 5).

Figure 3 is a schematic representation of a system according to an example. More particularly, figure 3 shows a system in which a data mapping is generated by the server 103 and transmitted to the proxy 107 (interface 5).

In both approaches, multiple techniques to identify what data mapping should be created can be used. For example:
Manifest extraction: Before a manifest is delivered to the end client the URLs and metadata within it can be read and converted into mappings with the nominal start and completion time being calculated based upon chunk length and position in the manifest.
URI prediction: Some encoder naming schemes use deterministic patterns to define the chunk filename, such as a simple incrementing counter in the name, or based upon the nominal timestamp of that chunk. These patterns can be exploited to predict upcoming filenames and therefore generate appropriate mapping definitions.
Explicit linking information: The encoder or origin may embed explicit information about how to generate the following chunk filename, this included adding HTTP headers (such as a 'link' header) or embedded within the file content.
Queued object: The server can maintain a queue of objects due to be transmitted and so knows (unlike the client) what is planned to be transmitted for the future and mappings can be generated directly off this list.

According to an example, in each approach, when creating the data mapping objects the nominal start and completion time can be calculated based upon the nominal chunk length of the previous and next chunks; as will be described later the start and completion times do not need to be precise but just sufficiently accurate for the heuristics to be joined. In each approach, the appropriate multicast address also needs to be selected, for the first three strategies this could be achieved by matching the mapping URL against a 'channel map' which matches URL patterns/prefixes against the appropriate multicast address. With the Queued Object strategy the server can explicitly know the target multicast to be used for that object and so has all the information required to generate the data mapping.

### Request Handling

According to an example, a Player 105 can makes HTTP(s) requests to the mABR Proxy 107. For each request the mABR proxy 107 can make two decisions:
1. Whether to proxy the request upstream to the Origin/CDN or return content received via multicast;
2. Whether to join or leave any multicast groups.

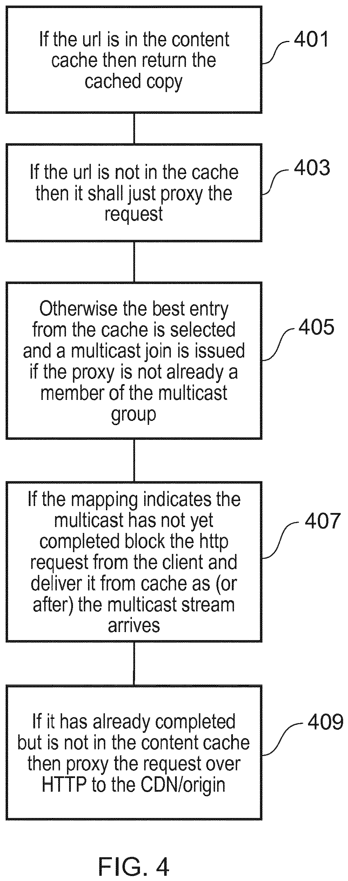

Figure 4 is a schematic representation of a method according to an example. More specifically, figure 4 depicts a process that can be applied when a content request arrives at a proxy server 107. The process shown allows the proxy 107 to determine if the content is soon to be received, if it is it blocks the client requests (pauses and does not yet return the response) and only starts to deliver the response once the multicast data arrives. Without this behaviour, it would otherwise have been treated as a cache miss and caused a unicast fetch from the CDN/origin to occur, placing more load on the network and upstream systems.

Therefore, according to an example, in block 401 and in response to a content request received at a proxy server 107 from a requesting device 105, if the content URL is in a content cache of the proxy 107 then the cached copy is returned to the device 105. In block 403, if the URL is not in a cache of the proxy 107 then it can simply proxy the request. In block 405, presuming a content URL is in the cache of the proxy 107, the best entry from the cache is selected and a multicast join is issued if the proxy is not already a member of the multicast group. In block 407, if the mapping indicates the multicast has not yet completed, the http request from the client is blocked and the content is delivered from cache as (or after) the multicast stream arrives. In block 409, if the content has already completed but is not in the content cache then the request can be proxied over HTTP to the CDN/origin 101.

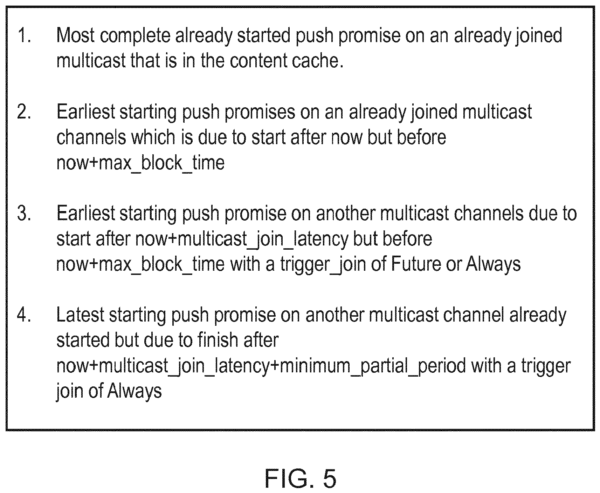

In some deployments the same URL may be multicast out multiple times, either on the same or different multicast addresses. As noted, the process of figure 4 handles this by selecting the 'best' candidate from the cache (block 405). In this connection, figure 5 is a schematic representation showing some criteria that can be used to determine a suitable data mapping according to an example. The criteria can be:
1. Most complete already started data mapping on an already joined multicast that is in the content cache; or
2. Earliest starting data mappings on an already joined multicast channels which is due to start after now but before now + max_block_time; or
3. Earliest starting data mapping on another multicast channels due to start after now + multicast_join_latency but before now + max_block_time with a trigger_join of Future or Always; or
4. Latest starting data mapping on another multicast channel already started but due to finish after now + multicast_join_latency + minimum_partial_period with a trigger join of Always.

In an example, the max_block_time is the maximum duration to block a client whilst waiting for content delivery to start; multicast_join_latency is the nominal latency to expect when joining the multicast; minimum_partial_period is the minimum amount of time it is worthwhile to receive over multicast. The value of max_block_time can be tuned and higher values may increase channel tune time (blocking the client for longer) but minimize unicast traffic.

### Data mapping object Lifecycle

The mABR Proxy 107 can receive or generate data mapping objects which can be stored in a data mapping object cache. If the mABR Proxy 107 is generating the objects internally (figure 2) then typically they would only be for the currently played channel(s) and bitrate(s). If it is receiving them from the mABR Server (figure 3) then it may receive data mapping objects for other channels and bitrates as well.

In an example, the removal of data mapping objects from the cache can be linked to the eviction of content from a Content Cache which typically operates with FIFO semantics (first in first out). That is, when an item is evicted from the Content Cache its corresponding data mapping object can be identified. All data mapping objects with an older or equal nominal completion time than the content's data mapping object can be evicted at the same time.

Using this mechanism old data mapping objects are only retained for as long as content is likely to be cached for. This reduces client bandwidth usage because if a client requests content that is older than the content cache retention period no data mapping object would be found and therefore a multicast join would not be issued.

If the multicast join were issued, client bandwidth would be wasted as the content received from that multicast group is likely to be evicted before the player would actually request the content.

In addition, in a household with multiple active players/devices for example, the proxy content cache is shared between all players. Thus, if the proxy starts caching a second stream then the retention period of the content cache will reduce (nominally by half if the bitrates are the same), if the first user was watching behind live this reduction will sometimes result in the first user also no longer receiving cache hits (as their content is now evicted before they can watch it) and therefore increasing unicast acquisition.

### Multicast Joining/Leaving

As noted above, multicast joins can be triggered when an HTTP request is received from a device 105 and a 'best' data mapping object is selected. If the data mapping object is for a multicast group which the proxy 107 is not currently a member of, a multicast join can be issued. This mechanism can be modified by either introducing a delay before the join is issued (n requests over a time period before the join is issued), or based upon additional properties on the data mapping object, these could include a time threshold, or 'trigger join' attributes which signals how the proxy should join based upon the data mapping object. Possible values of the 'trigger join' could include 'always', 'never' or 'future only', causing the proxy respectively to: always join if needed, never join based upon that data mapping object, or only join if the data mapping object is nominally in the future.

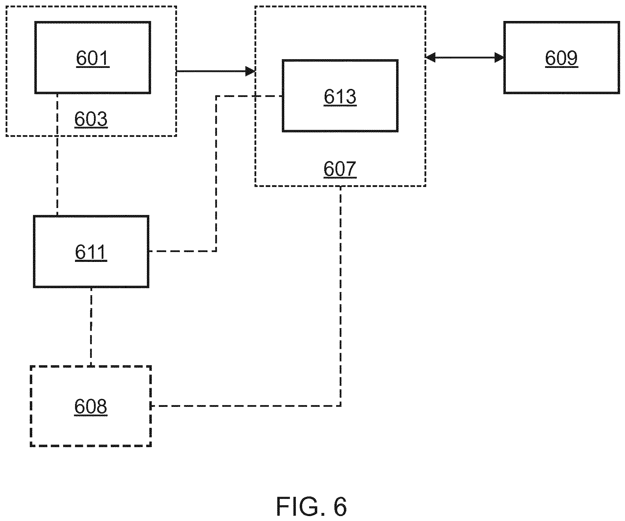

Figure 6 is a schematic representation of a system according to an example. A content server 603 can provide content 601 to a proxy apparatus 607. As noted above, the proxy 607 may be a standalone apparatus or may be part of or provided with user equipment 609, which can be a player device, which may be used to request the content 601. In an example, the proxy 607 can be a proxy service, which may be provided as part of a virtualised system implemented using multiple virtual machines.

In an example, the content 601 can be identified using a data mapping object 611. That is, as described above, a data mapping object 611 can comprise a mapping from a specific URI to the appropriate multicast address of the content 601 along with nominal start and completion times of when the content 601 (or fragments therof) is expected to be pushed or delivered by multicast. The mappings can either be generated internally by the proxy 607 or be created and distributed by a mABR server 608, which may be a multicast apparatus configured to provide the content or fragments thereof to at least the proxy (or another component). In either case, the data mapping object 611 is stored in a cache 613 of the proxy 607.

The aforementioned embodiments are meant to be examples useful for understanding the invention.

The scope of the invention is indicated by the appended claims rather than by the description and figures herein.

## Claims

1. A method for providing multicast adaptive bitrate content to user equipment (105), the method comprising:
storing data representing a mapping from a content identifier to a multicast address for the content at a proxy (107) configured to distribute the content, the data including a start value associated with delivery of the content or fragments thereof to the proxy (107);
receiving, at the proxy (107), a request for content from a user equipment (105);
using, by the proxy (107), the data representing the mapping, to determine whether the content is available at the proxy, and in response to a determination that the content is not available at the proxy determining, based on the start value, whether the content will become available at the proxy within a threshold period of time;
determining how to handle the request for content from the user equipment (105) based on the determination of whether the content will become available at the proxy within the threshold period of time, and in response to a determination that the content will become available at the proxy within the threshold period of time, pausing the request for content from the user equipment until the requested content is received via multicast; and
delivering the content to the user equipment (105) from the proxy (107) based on the determination of how to handle the request for content from the user equipment (105).

2. A method as claimed in claim 1, further comprising:
generating the data representing a mapping from a content identifier to a multicast address for the content at the proxy (107).

3. A method as claimed in claim 1, further comprising:
generating the data representing a mapping from a content identifier to a multicast address for the content at a multicast apparatus (103) configured to provide the content or fragments thereof to at least the proxy; and
transmitting the data from the multicast apparatus to the proxy (107).

4. A method as claimed in any preceding claim, wherein data representing multiple mappings from content identifiers to respective multicast addresses for content is provided, the method further comprising:
selecting a mapping that best matches the request for content from user equipment (105).

5. A method as claimed in claim 4, further comprising:
generating, at the proxy (107), a request to join a multicast group associated with the requested content if the proxy (107) is not a member of the group.

6. A method as claimed in any preceding claim, further comprising:
selecting a data mapping object from multiple data mapping objects according to a set of heuristics.

7. A system for providing multicast adaptive bitrate content to user equipment, the system comprising:
a proxy (107) as claimed in claim 11.

8. A system as claimed in claim 7, wherein the proxy (107) is configured to generate the data representing a mapping from a content identifier to a multicast address for the content.

9. A system as claimed in claim 7, further comprising a multicast apparatus (103) configured to generate the data representing a mapping from a content identifier to a multicast address for the content and transmit the data to the proxy (107).

10. A system as claimed in any of claims 7 to 9, wherein the proxy (107) is an apparatus or a service.

11. A proxy (107) for providing multicast adaptive bitrate content to user equipment (105), the proxy (107) comprising a cache to store data representing a mapping from a content identifier to a multicast address for the content, the data including a start value associated with delivery of the content or fragments thereof to the proxy (107), wherein the proxy (107) is configured to:
receive a request for content from a user equipment (105);
use the data representing the mapping to determine whether the content is available at the proxy (107), and in response to a determination that the content is not available at the proxy determining, based on the start value, whether the content will become available within a threshold period of time;
determine how to handle the request for content from the user equipment (105) based on the determination of whether the content will become available at the proxy within the threshold period of time, and in response to a determination that the content will become available at the proxy within the threshold period of time, pausing the request for content from the user equipment until the requested content is received via multicast; and
deliver the content to the user equipment (105) from the proxy (107) based on the determination of how to handle the request for content from the user equipment (105).

12. A proxy (107) as claimed in claim II, wherein the proxy (107) is configured to generate the data representing a mapping from a content identifier to a multicast address for the content.

13. A proxy (107) as claimed in claim I I or 12, wherein the proxy (107) is configured to select a data mapping object from multiple data mapping objects according to a set of heuristics.

14. A proxy (107) as claimed in any of claims I I to 13, wherein the proxy (107) is a service executable in a memory of user equipment or physical component of user equipment.

15. A computer program product, comprising a computer usable medium having computer readable program code embodied therein, said computer readable program code adapted to be executed to implement a method or provide multicast adaptive bitrate content to user equipment as claimed in any of claims I to 6.

## Patentansprüche

1. Verfahren zum Bereitstellen eines Multicastinhalts mit adaptiver Bitrate für eine Teilnehmereinrichtung (105), wobei das Verfahren Folgendes umfasst:
Speichern von Daten, die eine Zuordnung von einer Inhaltskennung zu einer Multicastadresse für den Inhalt repräsentieren, an einem Proxy (107), der dazu ausgelegt ist, den Inhalt zu verteilen, wobei die Daten einen Startwert beinhalten, der mit der Übermittlung des Inhalts oder Fragmenten davon zum Proxy (107) verknüpft ist;
Empfangen einer Anforderung von Inhalt am Proxy (107) von einer Teilnehmereinrichtung (105);
Verwenden der Daten, die die Zuordnung repräsentieren, durch den Proxy (107), um zu bestimmen, ob der Inhalt am Proxy verfügbar ist, und in Reaktion auf eine Bestimmung, dass der Inhalt nicht am Proxy verfügbar ist, Bestimmen auf Basis des Startwerts, ob der Inhalt innerhalb einer Schwellwertzeitperiode am Proxy verfügbar wird;
Bestimmen auf Basis der Bestimmung, ob der Inhalt innerhalb der Schwellwertzeitperiode am Proxy verfügbar wird, wie die Anforderung von Inhalt von der Teilnehmereinrichtung (105) zu handhaben ist, und in Reaktion auf eine Bestimmung, dass der Inhalt innerhalb der Schwellwertzeitperiode am Proxy verfügbar wird, Unterbrechen der Anforderung von Inhalt von der Teilnehmereinrichtung, bis der angeforderte Inhalt via Multicast empfangen wird; und
Übermitteln des Inhalts auf Basis der Bestimmung, wie die Anforderung von Inhalt von der Teilnehmereinrichtung (105) zu handhaben ist, vom Proxy (107) zur Teilnehmereinrichtung (105).

2. Verfahren nach Anspruch 1, das ferner Folgendes umfasst:
Erzeugen der Daten, die eine Zuordnung von einer Inhaltskennung zu einer Multicastadresse für den Inhalt repräsentieren, am Proxy (107).

3. Verfahren nach Anspruch 1, das ferner Folgendes umfasst:
Erzeugen der Daten, die eine Zuordnung von einer Inhaltskennung zu einer Multicastadresse für den Inhalt repräsentieren, an einer Multicastvorrichtung (103), die dazu ausgelegt ist, den Inhalt oder Fragmente davon mindestens dem Proxy bereitzustellen; und
Übertragen der Daten von der Multicastvorrichtung zum Proxy (107).

4. Verfahren nach einem der vorhergehenden Ansprüche, wobei Daten, die mehrere Zuordnungen von Inhaltskennungen zu jeweiligen Multicastadressen für Inhalt repräsentieren, bereitgestellt werden, wobei das Verfahren ferner Folgendes umfasst:
Auswählen einer Zuordnung, die am besten mit der Anforderung von Inhalt von der Teilnehmereinrichtung (105) übereinstimmt.

5. Verfahren nach Anspruch 4, das ferner Folgendes umfasst:
Erzeugen einer Anforderung zum Beitreten zu einer Multicastgruppe, die mit dem angeforderten Inhalt verknüpft ist, am Proxy (107), wenn der Proxy (107) kein Mitglied der Gruppe ist.

6. Verfahren nach einem der vorhergehenden Ansprüche, das ferner Folgendes umfasst:
Auswählen eines Datenzuordnungsobjekts gemäß einem Heuristiksatz aus mehreren Datenzuordnungsobjekten.

7. System zum Bereitstellen eines Multicastinhalts mit adaptiver Bitrate für eine Teilnehmereinrichtung, wobei das System Folgendes umfasst:
einen Proxy (107) nach Anspruch 11.

8. System nach Anspruch 7, wobei der Proxy (107) dazu ausgelegt ist, die Daten, die eine Zuordnung von einer Inhaltskennung zu einer Multicastadresse für den Inhalt repräsentieren, zu erzeugen.

9. System nach Anspruch 7, das ferner eine Multicastvorrichtung (103) umfasst, die dazu ausgelegt ist, die Daten, die eine Zuordnung von einer Inhaltskennung zu einer Multicastadresse für den Inhalt repräsentieren, zu erzeugen und die Daten zum Proxy (107) zu übertragen.

10. System nach einem der Ansprüche 7 bis 9, wobei der Proxy (107) eine Vorrichtung oder ein Dienst ist.

11. Proxy (107) zum Bereitstellen eines Multicastinhalts mit adaptiver Bitrate für eine Teilnehmereinrichtung (105), wobei der Proxy (107) einen Cache zum Speichern von Daten, die eine Zuordnung von einer Inhaltskennung zu einer Multicastadresse für den Inhalt repräsentieren, umfasst, wobei die Daten einen Startwert beinhalten, der mit der Übermittlung des Inhalts oder Fragmenten davon zum Proxy (107) verknüpft ist, wobei der Proxy (107) zu Folgendem ausgelegt ist:
Empfangen einer Anforderung von Inhalt von einer Teilnehmereinrichtung (105);
Verwenden der Daten, die die Zuordnung repräsentieren, um zu bestimmen, ob der Inhalt am Proxy (107) verfügbar ist, und in Reaktion auf eine Bestimmung, dass der Inhalt nicht am Proxy verfügbar ist, Bestimmen auf Basis des Startwerts, ob der Inhalt innerhalb einer Schwellwertzeitperiode verfügbar wird;
Bestimmen auf Basis der Bestimmung, ob der Inhalt innerhalb der Schwellwertzeitperiode am Proxy verfügbar wird, wie die Anforderung von Inhalt von der Teilnehmereinrichtung (105) zu handhaben ist, und in Reaktion auf eine Bestimmung, dass der Inhalt innerhalb der Schwellwertzeitperiode am Proxy verfügbar wird, Unterbrechen der Anforderung von Inhalt von der Teilnehmereinrichtung, bis der angeforderte Inhalt via Multicast empfangen wird; und
Übermitteln des Inhalts auf Basis der Bestimmung, wie die Anforderung von Inhalt von der Teilnehmereinrichtung (105) zu handhaben ist, vom Proxy (107) zur Teilnehmereinrichtung (105).

12. Proxy (107) nach Anspruch 11, wobei der Proxy (107) dazu ausgelegt ist, die Daten, die eine Zuordnung von einer Inhaltskennung zu einer Multicastadresse für den Inhalt repräsentieren, zu erzeugen.

13. Proxy (107) nach Anspruch 11 oder 12, wobei der Proxy (107) dazu ausgelegt ist, ein Datenzuordnungsobjekt gemäß einem Heuristiksatz aus mehreren Datenzuordnungsobjekten auszuwählen.

14. Proxy (107) nach einem der Ansprüche 11 bis 13, wobei der Proxy (107) ein Dienst ist, der in einem Speicher einer Teilnehmereinrichtung oder einer physischen Komponente der Teilnehmereinrichtung ausführbar ist.

15. Computerprogrammprodukt, das ein von einem Computer verwendbares Medium umfasst, auf dem sich computerlesbarer Programmcode befindet, wobei der computerlesbare Programmcode angepasst ist, ausgeführt zu werden, um ein Verfahren zu implementieren oder einer Teilnehmereinrichtung einen Multicastinhalt mit adaptiver Bitrate nach einem der Ansprüche 1 bis 6 bereitzustellen.

## Revendications

1. Procédé pour fournir un contenu à débit binaire adaptatif multidiffusion à un équipement utilisateur (105), le procédé comprenant :
le stockage de données représentant un mappage d'un identifiant de contenu à une adresse multidiffusion pour le contenu au niveau d'un proxy (107) configuré pour distribuer le contenu, les données incluant une valeur de départ associée à la livraison du contenu ou de fragments de celui-ci au proxy (107) ;
la réception, au niveau du proxy (107), d'une demande de contenu en provenance d'un équipement utilisateur (105) ;
l'utilisation, par le proxy (107), des données représentant le mappage, pour déterminer si le contenu est disponible au niveau du proxy, et en réponse à une détermination selon laquelle le contenu n'est pas disponible au niveau du proxy, déterminer, sur la base de la valeur de départ, si le contenu deviendra disponible au niveau du proxy dans une période de temps seuil ;
la détermination de comment prendre en charge la demande de contenu en provenance de l'équipement utilisateur (105) sur la base de la détermination de si le contenu deviendra disponible au niveau du proxy dans la période de temps seuil, et en réponse à une détermination selon laquelle le contenu deviendra disponible au niveau du proxy dans la période de temps seuil, la mise en pause de la demande de contenu en provenance de l'équipement utilisateur jusqu'à ce que le contenu demandé soit reçu via multidiffusion ; et
la livraison du contenu à l'équipement utilisateur (105) à partir du proxy (107) sur la base de la détermination de comment prendre en charge la demande de contenu en provenance de l'équipement utilisateur (105).

2. Procédé selon la revendication 1, comprenant en outre :
la génération des données représentant un mappage d'un identifiant de contenu à une adresse multidiffusion pour le contenu au niveau du proxy (107).

3. Procédé selon la revendication 1, comprenant en outre :
la génération des données représentant un mappage d'un identifiant de contenu à une adresse multidiffusion pour le contenu au niveau d'un appareil multidiffusion (103) configuré pour fournir le contenu ou des fragments de celui-ci au moins au proxy ; et
la transmission des données de l'appareil multidiffusion au proxy (107).

4. Procédé selon une quelconque revendication précédente, dans lequel des données représentant de multiples mappages d'identifiants de contenu à des adresses multidiffusion respectives pour un contenu sont fournies, le procédé comprenant en outre :
la sélection d'un mappage qui correspond le mieux à la demande de contenu en provenance de l'équipement utilisateur (105) .

5. Procédé selon la revendication 4, comprenant en outre :
la génération, au niveau du proxy (107), d'une demande pour rejoindre un groupe multidiffusion associé au contenu demandé si le proxy (107) n'est pas membre du groupe.

6. Procédé selon une quelconque revendication précédente, comprenant en outre :
la sélection d'un objet de mappage de données parmi de multiples objets de mappage de données selon un ensemble d'heuristiques.

7. Système pour fournir un contenu à débit binaire adaptatif multidiffusion à un équipement utilisateur, le système comprenant :
un proxy (107) selon la revendication 11.

8. Système selon la revendication 7, dans lequel le proxy (107) est configuré pour générer les données représentant un mappage d'un identifiant de contenu à une adresse multidiffusion pour le contenu.

9. Système selon la revendication 7, comprenant en outre un appareil multidiffusion (103) configuré pour générer les données représentant un mappage d'un identifiant de contenu à une adresse multidiffusion pour le contenu et transmettre les données au proxy (107).

10. Système selon l'une quelconque des revendications 7 à 9, dans lequel le proxy (107) est un appareil ou un service.

11. Proxy (107) pour fournir un contenu à débit binaire adaptatif multidiffusion à un équipement utilisateur (105), le proxy (107) comprenant un cache pour stocker des données représentant un mappage d'un identifiant de contenu à une adresse multidiffusion pour le contenu, les données incluant une valeur de départ associée à la livraison du contenu ou de fragments de celui-ci au proxy (107), dans lequel le proxy (107) est configuré pour :
recevoir une demande de contenu en provenance d'un équipement utilisateur (105) ;
utiliser les données représentant le mappage pour déterminer si le contenu est disponible au niveau du proxy (107), et en réponse à une détermination selon laquelle le contenu n'est pas disponible au niveau du proxy, déterminer, sur la base de la valeur de départ, si le contenu deviendra disponible dans une période de temps seuil ;
déterminer comment prendre en charge la demande de contenu en provenance de l'équipement utilisateur (105) sur la base de la détermination de si le contenu deviendra disponible au niveau du proxy dans la période de temps seuil, et en réponse à une détermination selon laquelle le contenu deviendra disponible au niveau du proxy dans la période de temps seuil, mettre en pause la demande de contenu en provenance de l'équipement utilisateur jusqu'à ce que le contenu demandé soit reçu via multidiffusion ; et
livrer le contenu à l'équipement utilisateur (105) à partir du proxy (107) sur la base de la détermination de comment prendre en charge la demande de contenu en provenance de l'équipement utilisateur (105).

12. Proxy (107) selon la revendication 11, dans lequel le proxy (107) est configuré pour générer les données représentant un mappage d'un identifiant de contenu à une adresse multidiffusion pour le contenu.

13. Proxy (107) selon la revendication 11 ou 12, dans lequel le proxy (107) est configuré pour sélectionner un objet de mappage de données parmi de multiples objets de mappage de données selon un ensemble d'heuristiques.

14. Proxy (107) selon l'une quelconque des revendications 11 à 13, dans lequel le proxy (107) est un service exécutable dans une mémoire d'équipement utilisateur ou un composant physique d'équipement utilisateur.

15. Produit de programme informatique, comprenant un support utilisable par ordinateur dans lequel est incorporé un code de programme lisible par ordinateur, ledit code de programme lisible par ordinateur étant adapté pour être exécuté pour mettre en œuvre un procédé ou fournir un contenu à débit binaire adaptatif multidiffusion à un équipement utilisateur selon l'une quelconque des revendications 1 à 6.
